# EUROPÄISCHE PATENTSCHRIFT

(11) **EP 0 290 894 B1**
(45) Veröffentlichungstag und Bekanntmachung des Hinweises auf die Patenterteilung: **03.11.1993**
(21) Anmeldenummer: 88106953.8
(22) Anmeldetag: 29.04.1988
(51) Int. Cl.: H04L 12/28

(54) **Verfahren zum Verteilen von aktuellen Adressentabellen in "n" ringförmigen Netzen**
Method for distributing the actual address tables in "n" ring networks
Méthode de diffusion des tables d'adresses actuelles sur un réseau comportant "n" boucles

(30) Priorität: 14.05.1987 DE 3716183
(43) Veröffentlichungstag der Anmeldung: 17.11.1988
(73) Patentinhaber: SIEMENS AKTIENGESELLSCHAFT, 80333 München (DE)
(72) Erfinder: Straussmann, Jürgen, Dipl.-Ing., D-1000 Berlin 22 (DE)

(56) Entgegenhaltungen:
- US-A- 4 466 060
- IEEE INFOCOM, San Francisco, März-April 1987, Seiten 170-180; J.J. GARCIA-LUNA-ACEVES: "A new minimum-hop routing algorithm"
- COMPUTER COMMUNICATION REVIEW, Band 17, Nr. 1-2, Januar-April 1987, Seiten 18-34, New York, US; S.G. GRUCHEVSKY et al.: "The Burroughs integrated adaptive routing system"
- COMPUTER NETWORKS AND ISDN SYSTEMS, Band 9, Nr. 2, Februar 1985, Seiten 109-130, Washington, US; M.S. SLOMAN et al.: "A routing algorithm for interconnected local area networks"

## Beschreibung

Die Erfindung betrifft ein Verfahren zum Verteilen von jeweils alle Teilnehmereinrichtungs-Adressen jeweils eines ringförmigen Netzes umfassenden Adressentabellen an alle Teilnehmereinrichtungen im jeweiligen ringförmigen Netz sowie an "n" weitere ringförmige Netze, wobei jedes ringförmige Netz mit einer das jeweilige ringförmige Netz überwachenden Teilnehmereinrichtung ausgestattet ist, in der nach jedem Konfigurieren in dem jeweils zu überwachenden ringförmigen Netz eine aktuelle Adressentabelle bereitgestellt wird und jedes ringförmige Netz über mindestens eine der physikalischen und prozeduralen Adaption zweier ringförmiger Netze dienende Koppeleinrichtung mit einem weiteren ringförmigen Netz verbunden ist und jede Teilnehmereinrichtung mit einer dem jeweiligen Netzzugriff dienenden Zugriffssteuerung und weiteren, teilnehmereinrichtungsinterne Prozeduren steuernden Steuereinrichtungen ausgestattet ist, mit denen Paketformat aufweisende Informationen gebildet, über ringförmige Netze übermittelt und die empfangenen Informationen je nach Informationsgehalt weiter verarbeitet werden.

Um innerhalb "n" ringförmiger Netze eine gezielte Übermittlung von Nachrichten durchführen zu können, muß in jeder der in das ringförmige Netz einbezogenen Teilnehmereinrichtungen eine Adressentabelle vorliegen, die jeweils alle der in dieses ringförmige Netz einbezogenen Teilnehmereinrichtungen umfaßt. Für das Bilden derartiger Adressentabellen sind Verfahren bekannt, mittels derer die Adressen der Teilnehmereinrichtungen nach jedem Konfigurieren in einem ringförmigen Netz abgefragt und in einer Teilnehmereinrichtung gesammelt werden. Die Steuerung dieses Verfahrens bzw. das Abfragen, Sammeln und anschließend die Aufbereitung der einzelnen Adressen zu einer aktuellen Adressentabelle übernimmt meistens diejenige Teilnehmereinrichtung, die das jeweilige ringförmige Netz überwacht. Hierbei werden Nachrichten sowie Netzsteuerungs- und Überwachungsinformationen sowohl in diesem Verfahren als auch in allen weiteren, der Nachrichtenübermittlung, der Netzsteuerung sowie Überwachung dienenden Verfahren, vorzugsweise paketweise, gebildet, übermittelt und je nach Informationsgehalt weiterverarbeitet. Der vermittlungstechnische Zugriff der einzelnen Teilnehmereinrichtungen auf das jeweilige ringförmige Netz erfolgt in überwiegendem Maße mit dem sogenannten "Token Access Verfahrens"; siehe ANSI/IEEE-Standard 802.5. Diejenigen Verfahren und Prozeduren, mittels derer eine Teilnehmereinrichtung auf ein ringförmiges Netz zugreift, werden von Steuereinrichtungen, die jeweils in den Zugriffseinrichtungen angeordnet sind, gesteuert.

Des weiteren werden in zunehmendem Maße ringförmige Netze untereinander verknüpft, d. h. die Teilnehmereinrichtungen der jeweiligen ringförmigen Netze können auch gezielt Nachrichten an Teilnehmereinrichtungen anderer ringförmiger Netze übermitteln. Die Verknüpfung der ringförmigen Netze übernimmt meist eine Koppeleinrichtung, die sowohl die prozedurale als auch die physikalische Adaption der zu verknüpfenden ringförmigen Netze durchführt. Diese Koppeleinrichtung wird entweder zwischen zwei Teilnehmereinrichtungen oder in einer an zwei oder mehrere ringförmige Netze angeschlossenen Teilnehmereinrichtung zwischen die dem jeweiligen Netzzugriff dienenden Zugriffseinrichtungen eingefügt. Um nun einen gezielten Nachrichtenaustausch zwischen allen Teilnehmereinrichtungen aller verknüpften ringförmigen Netze zu ermöglichen, müssen in jeder Teilnehmereinrichtung alle Teilnehmereinrichtungs-Adressen bekannt sein. Ausgehend von dem Vorliegen einer Adressentabelle in der ein ringförmiges Netz überwachenden Teilnehmereinrichtung sind Verfahren bekannt, durch die die Adressentabelle während des Einrichtens eines ringförmigen Netzes auf Initiative der überwachenden Teilnehmereinrichtung an die Teilnehmereinrichtungen des zugehörigen ringförmigen Netzes verteilt werden. Die Adressentabellen der jeweils weiteren, verknüpften ringförmigen Netze können druckschriftlich an jeder Teilnehmereinrichtung bereitliegen. Vor einem Nachrichtenaustausch mit einer Teilnehmereinrichtung, die nicht im eigenen ringförmigen Netz angeordnet ist, kann die gewünschte Zieladresse mit Hilfe der Druckschrift - Teilnehmerverzeichnis - ermittelt und manuell über eine entsprechende Eingabeeinrichtung an der Teilnehmereinrichtung eingegeben werden. Eine Gewähr, daß das jeweilige Ziel - ringförmiges Netz bzw. Teilnehmereinrichtung - betriebsbereit ist, kann hierbei nicht gegeben sein.

Die Aufgabe der Erfindung besteht darin, ein Verfahren zur Verteilung von Adressentabellen in "n" ringförmigen Netzen derart auszugestalten, daß eine aktuelle Adressentabelle sowohl innerhalb des jeweiligen ringförmigen Netzes als auch in allen weiteren, untereinander verknüpften ringförmigen Netzen während des Einrichtens des jeweiligen ringförmigen Netzes und nach jedem Konfigurationsvorgang in einem ringförmigen Netz automatisch an jede Teilnehmereinrichtung verteilt wird. Diese Aufgabe wird durch die Merkmale des Anspruchs 1 gelöst.

Der mit der Erfindung erzielbare Vorteil liegt darin, daß mittels nur dreier unterschiedlicher Informationspakete die aktuell vorliegende Adressentabelle automatisch an alle Teilnehmereinrichtungen von miteinander verknüpften ringförmigen Netzen verteilt werden, wodurch sich eine sehr einfache und an ringförmige Netze angepaßte Verteilungsprozedur mit geringem Software-Realisierungsaufwand ergibt.

Ein wesentlicher Aspekt der vorteilhaften Weiterbildungen der Erfindung gemäß den Patentansprüchen 2 und 3 ist darin zu sehen, daß an die Verteilinformation eine Zählinformation, die eine um eine Teilnehmereinrichtung repräsentierende Anzahl verringerte Anzahl von Teilnehmereinrichtungen in einem ringförmigen Netz anzeigt sowie eine Ringübertrittsinformation, die eine Verteilung einer Adressentabelle über das jeweilige dieser Adressentabelle zugeordnete ringförmige Netz hinaus anzeigt, anfügbar sind. Diese beiden, an die Verteilinformation anfügbaren Informationen dienen dazu, daß Fehler - hervorgerufen z. B. durch kurzzeitige Störungen oder Ausfälle einer Teilnehmereinrichtung - insbesondere von den das jeweilige ringförmige Netz überwachenden Teilnehmereinrichtungen, aber auch von allen weiteren Teilnehmereinrichtungen erkannt werden und entsprechende Fehlerlokalisierungs- bzw. Beseitigungsmaßnahmen eingeleitet werden können. So kann beispielsweise jede Teilnehmereinrichtung erkennen, ob die bei ihr ankommende Zählinformation mit der bei störungsfreier Adressentabellen-Verteilung zu erwartenden Zählinformation übereinstimmt und anschließend bei Ungleichheit die entsprechenden Maßnahmen einleiten.

Nach einer weiteren vorteilhaften Weiterbildung der Erfindung gemäß Patentanspruch 4 wird in jeder Teilnehmereinrichtung nach dem Empfang einer Verteilinformation die darin enthaltene Netzinformation auf das Vorliegen eines ringförmigen Netzes, in dem die dieser Teilnehmereinrichtung zugehörige Adressentabelle noch nicht verteilt wurde, überprüft und nach dem Feststellen eines derartigen ringförmigen Netzes das Verteilen der zugehörigen Adressentabelle durch Bilden einer Verteilinformation eingeleitet. Diese Überprüfung ist dann erforderlich, wenn während des Einrichtens mehrerer ringförmiger Netze sogenannte "Inselnetze" - d. h. jeweils eine Gruppe ringförmiger Netze untereinander verknüpft, jedoch von einer weiteren Gruppe isoliert -entstehen und anschließend diese "Inselnetze" durch Einrichten weiterer ringförmiger Netze untereinander verknüpft werden. Dabei kommt es vor, daß zwar die neu eingerichteten ringförmigen Netze die vollständige Netzinformation erkennen, nicht jedoch die "Inselnetze". Um diesen Informationsmangel zu vermeiden, überprüft jede Teilnehmereinrichtung die Netzinformation und leitet nach dem Feststellen eines ringförmigen Netzes, dessen Adressentabelle unbekannt ist, das Verfahren zum Verteilen seiner Adressentabelle an das unbekannte ringförmige Netz ein, wodurch sowohl das unbekannte ringförmige Netz seine Adressentabelle als auch das jeweilige ringförmige Netz die unbekannte Adressentabelle erhält. Nach diesem Adressentabellen-Verteilen oder gegebenenfalls nach mehreren derartigen Verteilprozeduren liegen in jeder Teilnehmereinrichtung alle aktuellen Adressentabellen in einem Adressentabellen-Speicher vor.

Im folgenden wird ein Ausführungsbeispiel der Erfindung anhand von zeichnerischen Darstellungen näher erläutert. Dabei zeigen:
- Fig. 1: ein Blockschaltbild dreier untereinander verknüpfter ringförmiger Netze und
- Fig. 2: ein Ablaufdiagramm für einen Beobachtungszeitraum zur Erläuterung des Informationsaustausches bei unterschiedlichen Einrichtungs-Zeitpunkten der drei ringförmigen Netze.

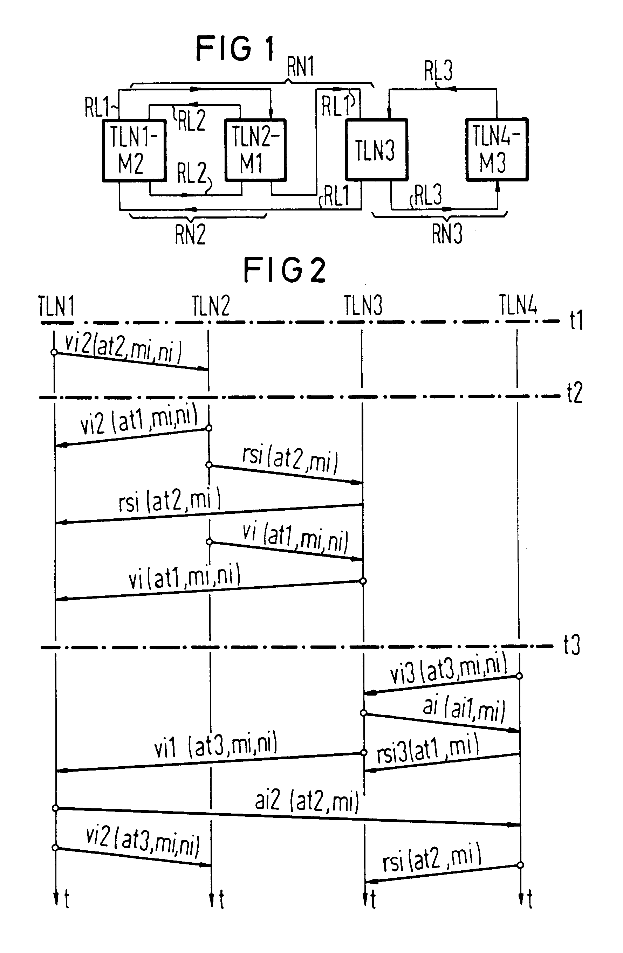

Fig. 1 zeigt vier Teilnehmereinrichtungen TLN1...TLN4, die mittels mehrerer Ringleitungen RL, drei ringförmige Netze RN bildend, untereinander verbunden sind. Jede dieser Teilnehmereinrichtungen TLN besteht beispielsweise aus den nicht dargestellten Systemkomponenten, wie Ringsteuereinrichtung, Kanalkontrollschaltung, Schnittstellensteuerung und Teilnehmereinrichtungssteuerung. Diese Systemkomponenten dienen der Steuerung des Zugriffs der einzelnen Teilnehmereinrichtungen TLN auf die jeweilige Ringleitung RL. Die Anzahl und Anordnungen der Systemkomponenten - im wesentlichen abhängig von der Anzahl der an diese Teilnehmereinrichtungen angeschlossenen ringförmigen Netze RN - sowie deren Funktionen sollen beispielhaft der in der DE-OS 33 43 962 A1 erläuterten Anzahl, Anordnung und Funktionsaufteilung entsprechen. Die erste, zweite sowie die dritte Teilnehmereinrichtung TLN1...TLN3 sind über drei Ringleitungsabschnitte RL1, ein erstes ringförmiges Netz RN1 bildend, untereinander verbunden. Zwei weitere Ringleitungsabschnitte RL2 verbinden die erste und zweite Teilnehmereinrichtung TLN1, TLN2 derart miteinander, daß ein zweites ringförmiges Netz RN2 entsteht. Die Übermittlungsrichtung der beiden ringförmigen Netze RN1, RN2 soll entgegengesetzt sein. An die dritte Teilnehmereinrichtung TLN3 sind zwei weitere, mit der vierten Teilnehmereinrichtung TLN4 verbundene Ringleitungsabschnitte RL3 in der Art herangeführt, daß die dritte und vierte Teilnehmereinrichtung TLN3, TLN4 ein drittes ringförmiges Netz RN3 bilden. Die Übermittlungsrichtung dieses dritten ringförmigen Netzes RN3 sei beispielhaft entgegengesetzt zu der des ersten ringförmigen Netzes RN1 angenommen. Zur Überwachung der ringförmigen Netze RN sind jeweils folgende Teilnehmereinrichtungen TLN bestimmt: Die erste Teilnehmereinrichtung TLN1-M2 überwacht das zweite ringförmige Netz RN2, die zweite Teilnehmereinrichtung TLN2-M1 überwacht das erste ringförmige Netz RN1 und die vierte Teilnehmereinrichtung TLN4-M3 überwacht das dritte ringförmige Netz RN3. Anhand dieser wohl kaum praxisbezogenen, jedoch übersichtlichen Netzkonfiguration - vier Teilnehmereinrichtungen TLN über drei ringförmige Netze RN verknüpft - wird im folgenden das erfindungsgemäße Verfahren zum Verteilen der Adressentabellen erläutert.

Hierzu ist in Fig. 2 jeder Teilnehmereinrichtung TLN eine vertikale Zeitachse t zugeordnet. Zunächst sei angenommen, daß die Inbetriebnahme des zweiten ringförmigen Netzes RN2 am weitesten fortgeschritten ist, d. h. daß in der das zweite ringförmige Netz RN2 überwachenden Teilnehmereinrichtungen TLN1-M2 eine aktuelle, vollständige Adressentabelle at2 zum Zeitpunkt t1 - durch eine strich-punktierte Linie dargestellt - vorliegt. Die erste Teilnehmereinrichtung TLN1-M2 leitet das Verteilen dieser Adressentabelle at2 im zweiten ringförmigen Netz RN2 in der Art ein, daß sie eine ein Paketformat aufweisende Verteilinformation vi2 bildet und an die zweite Teilnehmereinrichtung TLN2-M1 übermittelt. Diese Verteilinformation vi2 ist aus der aktuellen Adressentabelle at2, einer Meldeinformation mi und einer Netzinformation ni zusammengesetzt. Die aktuelle Adressentabelle at2 enthält alle Adressen der in das zweite ringförmige Netz RN2 einbezogenen Teilnehmereinrichtung TLN1, TLN2. Die Meldeinformation mi wird beispielsweise durch eine bestimmte Bitkombination gebildet, die anzeigt, daß es sich bei der vorliegenden Adressentabelle at2 um eine aktuelle, neu gebildete Adressentabelle at2 handelt. In der Netzinformation ni wird von der zweiten Teilnehmereinrichtung TLN2-M1 vermerkt, auf welcher die aktuell vorliegende und in der zweiten Verteilinformation vi2 enthaltene zweite Adressentabelle at2 bereits verteilt wurde. In diesem Falle kann nur das zweite ringförmige Netz RN2 vermerkt sein, da weitere Adressentabellen at in weiteren ringförmigen Netzen RN noch nicht vorliegen.

Nun sei angenommen, daß in der das erste ringförmige Netz RN1 überwachenden Teilnehmereinrichtung TLN2-M1 zum Zeitpunkt t2 eine aktuelle Adressentabelle at1 des ersten ringförmigen Netzes RN1 vorliegt. Da die zweite Teilnehmereinrichtung TLN2-M1 Zugang zum ersten und zweiten ringförmigen Netz RN1, RN2 besitzt und gleichzeitig die das erste ringförmige Netz RN1 überwachende Teilnehmereinrichtung TLN2-M1 darstellt, beginnt die zweite Teilnehmereinrichtung TLN2 mit dem Verteilen der Adressentabelle at1 des ersten ringförmigen Netzes RN1 an das zweite ringförmige Netz RN2. Hierzu bildet sie eine Verteilinformation vi2, die die Adressentabelle at1 des ersten ringförmigen Netzes RN1, eine eine aktuelle Adressentabelle at1 anzeigende Meldeinformation mi und eine Netzinformation ni enthält, in der vermerkt ist, daß die Adressentabelle at1 des ersten ringförmigen Netzes RN1 im ersten und zweiten ringförmigen Netz RN1, RN2 verteilt wurde. Anschließend wird die Adressentabelle at2 des zweiten ringförmigen Netzes RN2 im ersten ringförmigen Netz RN1 verteilt. Die zweite Teilnehmereinrichtung TLN2 bildet hierzu eine Rundsendeinformation rsi1, die die aktuelle Adressentabelle at2 des zweiten ringförmigen Netzes RN2 und eine eine Kopieraufforderung beinhaltende Meldeinformation mi enthält und leitet diese Rundsendeinformation rsi an die Teilnehmereinrichtungen TLN3, TLN1 des ersten ringförmigen Netzes RN1 weiter. Im Anschluß daran beginnt die zweite Teilnehmereinrichtung TLN2 die aktuell vorliegende Adressentabelle at1 des ersten ringförmigen Netzes RN1 im ersten ringförmigen Netz RN1 zu verteilen. Hierzu bildet sie eine Verteilinformation vi1, die die aktuelle Adressentabelle at1, eine die aktuelle Adressentabelle at1 anzeigende Meldeinformation mi und eine Netzinformation ni enthält, in der vermerkt ist, daß die aktuelle Adressentabelle at1 des ersten ringförmigen Netzes RN1 im ersten und zweiten ringförmigen Netz RN1, RN2 verteilt wurde. Diese Verteilinformation vi1 wird ausgehend von der zweiten Teilnehmereinrichtung TLN2 zunächst an die dritte Teilnehmereinrichtung TLN3 und anschließend an die erste Teilnehmereinrichtung TLN1 weitergeleitet.

Des weiteren sei angenommen, daß zu einem Zeitpunkt t3 in der das dritte ringförmige Netz RN3 überwachenden Teilnehmereinrichtung TLN4-M3 eine dritte, die aktuellen Adressen des dritten ringförmigen Netzes RN3 enthaltende Adressentabelle at3 vorliegt. Da die vierte Teilnehmereinrichtung TLN3 keinen Zugang zu weiteren ringförmigen Netzen RN besitzt, beginnt diese die dritte aktuelle Adressentabelle at3 im dritten ringförmigen Netz RN3 zu verteilen. Dazu bildet sie eine Verteilinformation vi3, die die aktuelle Adressentabelle at3 des dritten ringförmigen Netzes RN3, eine die aktuelle Adressentabelle at3 anzeigende Meldeinformation mi und eine Netzinformation ni enthält, die anzeigt, daß die aktuelle Adressentabelle at3 im dritten ringförmigen Netz RN3 verteilt wurde. Da die dritte Teilnehmereinrichtung TLN3 Zugang zum ersten ringförmigen Netz RN1 besitzt und in dieser die aktuelle Adressentabelle at1 des ersten ringförmigen Netzes RN1 vorliegt, wird in dieser dritten Teilnehmereinrichtung TLN3 nach dem Empfang der von der vierten Teilnehmereinrichtung TLN4 ausgesandten Verteilinformation vi3 eine Antwortinformation ai1 gebildet und an die vierte Teilnehmereinrichtung TLN4 übermittelt. Diese Antwortinformation ai1 setzt sich aus der aktuellen Adressentabelle at1 des ersten ringförmigen Netzes RN1 und einer Meldeinformation mi, die eine Aufforderung zum Verteilen der Adressentabelle at1 enthält, zusammen. Die das dritte ringförmige Netz RN3 überwachende Teilnehmereinrichtung TLN4-M3 bildet nach dem Empfang der Antwortinformation ai1 eine Rundsendeinformation rsi3 und leitet diese im Sinne einer Verteilung der Adressentabelle at1 im dritten ringförmigen Netz RN3 an die dritte Teilnehmereinrichtung TLN3 weiter. Diese Rundsendeinformation rsi3 wird durch die aktuelle Adressentabelle at1 des ersten ringförmigen Netzes RN1 und einer Meldeinformation mi, die eine Kopieraufforderung enthält, gebildet. Zwischenzeitlich begann die dritte Teilnehmereinrichtung TLN3 die aktuelle Adressentabelle at3 des dritten ringförmigen Netzes RN3 im ersten ringförmigen Netz RN1 zu verbreiten. Hierzu bildete sie eine Verteilinformation vi1, die sie an die erste Teilnehmereinrichtung TLN1 weiterleitete. Diese Verteilinformation vi1 enthält die aktuelle Adressentabelle at3 des dritten ringförmigen Netzes RN3, eine das Vorliegen einer aktuelle Adressentabelle at3 anzeigende Meldeinformation mi und eine Netzinformation ni, in der vermerkt wird, daß die aktuelle Adressentabelle at3 des dritten ringförmigen Netzes RN3 im dritten und ersten ringförmigen Netz RN3, RN1 verteilt wurde. Da die erste Teilnehmereinrichtung TLN1 die in Übermittlungsrichtung erste Teilnehmereinrichtung TLN1 darstellt, die Zugriff auf das zweite ringförmige Netz RN2 besitzt, wird von dieser die Verteilung der aktuellen Adressentabelle at2 des zweiten ringförmigen Netzes RN2 an das dritte ringförmige Netz RN3 eingeleitet. Hierfür bildet sie eine Antwortinformation ai2, die sie gezielt an die das dritte ringförmige Netz RN3 überwachende Teilnehmereinrichtung TLN4-M3 weiterleitet. Diese Antwortinformation ai2 enthält die aktuelle Adressentabelle at2 des zweiten ringförmigen Netzes RN2 und eine mit einer Aufforderung zum Verteilen der aktuellen Adressentabelle at2 versehene Meldeinformation mi. Nach Empfang dieser Antwortinformation ai2 beginnt die vierte Teilnehmereinrichtung TLN4 die aktuelle Adressentabelle at2 des zweiten ringförmigen Netzes RN2 im dritten ringförmigen Netz RN3 durch Bilden einer Rundsendeinformation rsi3 zu verteilen. Diese Rundsendeinformation rsi3 weist wiederum die aktuelle Adressentabelle at2 des zweiten ringförmigen Netzes RN2 sowie eine Meldeinformation mi, in der eine Aufforderung zum Kopieren der aktuellen Adressentabelle at2 enthalten ist, auf. Annähernd gleichzeitig leitet die erste Teilnehmereinrichtung TLN2 mittels einer Verteilinformation vi2 die aktuelle Adressentabelle at3 des dritten ringförmigen Netzes RN3 im Sinne einer Verteilung dieser Adressentabelle at3 im zweiten ringförmigen Netz RN2 an die zweite Teilnehmereinrichtung TLN2 weiter. Die Verteilinformation vi2 setzt sich aus der aktuellen Adressentabelle at3 des dritten ringförmigen Netzes, einer das Vorliegen einer aktuellen Adressentabelle at3 anzeigenden Meldeinformation mi und einer Netzinformation ni, die anzeigt, daß die aktuelle Adressentabelle at3 des dritten ringförmigen Netzes RN3 in allen vorhandenen ringförmigen Netzen RN verteilt wurde, zusammen.

Sollte nun aufgrund einer Störung während der Verteilung der Informationen in einer der Teilnehmereinrichtungen TLN in der empfangenen Netzinformation ni ein ringförmiges Netz RN ermittelt werden, an das die in dieser Teilnehmereinrichtung vorliegende aktuelle Adressentabelle at noch nicht verteilt wurde, so leitet diese Teilnehmereinrichtung TLN das Verteilen dieser Adressentabelle at in vorhergehend beschriebener Form und mittels erläuterter Prozedur ein.

## Patentansprüche

1. Verfahren zum Verteilen von jeweils alle Teilnehmereinrichtungs-Adressen jeweils eines ringförmigen Netzes umfassenden Adressentabellen an alle Teilnehmereinrichtungen im jeweiligen ringförmigen Netz sowie an "n" weitere ringförmige Netze, wobei jedes ringförmige Netz mit einer das jeweilige ringförmige Netz überwachenden Teilnehmereinrichtung ausgestattet ist, in der nach jedem Konfigurieren in dem jeweils zu überwachenden ringförmigen Netz eine aktuelle Adressentabelle bereitgestellt wird und jedes ringförmige Netz über mindestens eine der physikalischen und prozeduralen Adaption zweier ringförmiger Netze dienenden Koppeleinrichtung mit einem weiteren ringförmigen Netz verbunden ist und jede Teilnehmereinrichtung mit einer dem jeweiligen Netzzugriff dienenden Zugriffssteuerung und weiteren, teilnehmereinrichtungsinterne Prozeduren steuernden Steuereinrichtungen ausgestattet ist, mit denen Paketformat aufweisende Informationen gebildet, über ringförmige Netze übermittelt und die empfangenen Informationen je nach Informationsgehalt weiter verarbeitet werden, wobei
- nach dem Vorliegen einer aktuellen Adressentabelle (at) in einer ein ringförmiges Netz (RN) überwachenden Teilnehmereinrichtung (TLN-M) eine ein Paketformat aufweisende Verteilinformation (vi) derart gebildet wird, daß
· die aktuell zu verteilende Adressentabelle (at),
· eine das Vorliegen einer aktuellen Adressentabelle (at) anzeigende Meldeinformation (mi) und
· eine Netzinformation (ni), die angibt, in welchem ringförmigen Netz (RN) die aktuelle Adressentabelle (at) verteilt wurde,
enthalten ist, und
die so gebildete Verteilinformation (vi) an die in Übermittlungsrichtung folgenden Teilnehmereinrichtungen (TLN) weitergeleitet wird,
in denen die aktuelle Adressentabelle (at) sowie die Netzinformationen (ni) kopiert bzw. gespeichert werden und überprüft wird, ob über die jeweilige Teilnehmereinrichtung (TLN) Zugang zu weiteren ringförmigen Netzen (RN) besteht,
- nach dem Feststellen eines derartigen Zugangs von der jeweiligen Teilnehmereinrichtung (TLN) eine weitere Verteilinformation (vi)
· mit der aktuellen Adressentabelle (at),
· mit der Meldeinformation (mi) und
· mit einer weiteren Netzinformation (ni), die angibt, in welchen ringförmigen Netzen die aktuelle Adressentabelle verteilt wurde,
gebildet wird,
und diese Verteilinformation (vi) an die Teilnehmereinrichtungen (TLN) der weiteren ringförmigen Netze (RN) weitergeleitet wird und jede Teilnehmereinrichtung (TLN) die aktuelle Adressentabelle (at) sowie die weitere Netzinformation (ni) kopiert und speichert,
- in den jeweils ein ringförmiges Netz (RN) überwachenden Teilnehmereinrichtungen (TLN) der weiteren ringförmigen Netze (RN) nach dem Empfang einer Verteilinformation (vi) eine ein Paketformat aufweisende Antwortinformation (ai)
· mit der Adressentabelle (at) des weiteren ringförmigen Netzes (RN) und
· mit einer die Antwort anzeigenden Meldeinformation (mi)
gebildet wird
und diese Antwortinformation (ai) an die das ringförmige Netz (RN) überwachende und ursprünglich die aktuelle Adressentabelle bildende Teilnehmereinrichtung (TLN-M) weitergeleitet wird,
- diese Teilnehmereinrichtung (TLN-M) nach dem Empfang einer an sie adressierten Antwortinformation (ai) eine ein Paketformat aufweisende Rundsendeinformation (rsi) derart bildet,
· daß die in der Antwortinformation (ai) angegebene Adressentabelle (at) und
· eine eine Kopieraufforderung beinhaltende Meldeinformation (mi)
enthalten ist, und die so gebildete Rundsendeinformation (rsi) an die in Übermittlungsrichtung folgenden Teilnehmereinrichtungen (TLN) des zugehörigen ringförmigen Netzes (RN) übermittelt werden und jede der Teilnehmereinrichtungen (TLN) die Adressentabelle (at) kopiert und speichert.

2. Verfahren nach Anspruch 1,
**dadurch gekennzeichnet**,
daß in einer die Verteilinformation (vi) bildenden Teilnehmereinrichtung (TLN) der Verteilinformation (vi) eine Zählinformation hinzugefügt wird, die die um eine eine Teilnehmereinrichtung (TLN) repräsentierende Anzahl verringerte Anzahl von Teilnehmereinrichtungen (TLN) in einem ringförmigen Netz (RN) anzeigt und die von den in Übermittlungsrichtung folgenden Teilnehmereinrichtungen (TLN) um eine jeweils eine Teilnehmereinrichtung (TLN) repräsentierende Zählinformation verringert wird.

3. Verfahren nach Anspruch 1 und 2,
**dadurch gekennzeichnet**,
daß in einer die Verteilinformation (vi) bildenden Teilnehmereinrichtung (TLN) der Verteilinformation (vi) eine Ringübertrittsinformation hinzugefügt wird, die eine Verteilung einer Adressentabelle (at) über das jeweils dieser Adressentabelle (at) zugeordnete ringförmige Netz (RN) hinaus anzeigt.

4. Verfahren nach einem der vorhergehenden Ansprüche,
**dadurch gekennzeichnet**,
daß in jeder Teilnehmereinrichtung (TLN) nach dem Empfang einer Verteilinformation (vi) die darin enthaltene Netzinformation (ni) auf das Vorliegen eines ringförmigen Netzes (RN), in dem die dieser Teilnehmereinrichtung (TLN) zugehörige Adressentabelle (at) noch nicht verteilt wurde, überprüft wird, und nach dem Feststellen eines derartigen ringförmigen Netzes (RN) das Verteilen der zugehörigen Adressentabelle (at) durch Bilden einer Verteilinformation (vi) eingeleitet wird.

## Claims

1. Method for distributing address tables which include all subscriber equipment addresses in each case of a ring-shaped network to all subscriber equipments in the respective ring-shaped network and to "n" further ring-shaped networks, each ring-shaped network being equipped with a subscriber equipment which monitors the respective ring-shaped network and in which a current address table is prepared after each configuration in the respective ring-shaped network to be monitored, and each ring-shaped network is connected to a further ring-shaped network via at least one switching device used for the physical and procedural adaptation of two ring-shaped networks and each subscriber equipment is equipped with an access controller used for access to the respective network and with further control devices which control internal procedures of the subscriber equipments and by means of which information items having a packet format are formed and transmitted via ring-shaped networks, and the received information items are further processed depending on the information they contain, in which process
- once a current address table (at) has arrived at a subscriber equipment (TLN-M) which is monitoring a ring-shaped network (RN), a distribution information item (vi) having a packet format is formed in such a way that
· the address table (at) which is currently to be distributed,
· a signalling information item (mi) indicating the presence of a current address table (at) and
· a network information item (ni) indicating in which ring-shaped network (RN) the current address table (at) has been distributed
are contained and
the distribution information item (vi) which has ben formed in this manner is passed on to the following subscriber equipments (TLN) in the direction of transmission, in which subscriber equipments the current address table (at) and the network information items (ni) are copied and/or stored, and a check is made to determine whether access to further ring-shaped networks (RN) can be gained via the respective subscriber equipment (TLN),
- once such access by the respective subscriber equipment (TLN) has been determined, a further distribution information item (vi) is formed
· having the current address table (at),
· having the signalling information item (mi) and
· having a further network information item (ni) which indicates in which ring-shaped networks the current address table has been distributed,
and this distribution information item (vi) is passed on to the subscriber equipments (TLN) of the further ring-shaped networks (RN) and each subscriber equipment (TLN) copies and stores the current address table (at) and the further network information item (ni),
- a response information item (ai)
· having the address table (at) of the further ring-shaped network (RN) and
· having a signalling information item (mi) indicating the response
having a packet format is formed after receipt of a distribution information item (vi) in the subscriber equipments (TLN), which respectively monitor a ring-shaped network (RN), of the further ring-shaped networks (RN)
and this response information item (ai) is passed on to the subscriber equipment (TLN-M) which is monitoring the ring-shaped network (RN) and by which the current address table was originally formed,
- after receipt of a response information item (ai) addressed to it, this subscriber equipment (TLN-M) forms a broadcast information item (rsi) having a packet format in such a way that
· the address table (at) specified in the response information item (ai) and
· a signalling information item (mi) containing a copy request
are included, and the broadcast information item (rsi) formed in this way is transmitted to the subscriber equipments (TLN), following in the direction of transmission, of the associated ring-shaped network (RN) and each of the subscriber equipments (TLN) copies and stores the address table (at).

2. Method according to Claim 1, characterised in that a counting information item is added to the distribution information item (vi) in a subscriber equipment (TLN) forming the distribution information item (vi), the said counting information item indicating the number of subscriber equipments (TLN) in a ring-shaped network (RN) minus a number representing a subscriber equipment (TLN) and having deducted from it a counting information item representing one subscriber equipment (TLN) in each case by the subscriber equipments (TLN) following in the direction of transmission.

3. Method according to Claims 1 and 2, characterised in that, in a subscriber equipment (TLN) forming the distribution information item (vi), a ring transfer information item is added to the distribution information item (vi), the said ring transfer information item indicating distribution of an address table (at) beyond the ring-shaped network (RN) respectively assigned to the said address table (at).

4. Method according to one of the preceding claims, characterised in that, after receipt of a distribution information item (vi), the network information (ni) contained by the latter is checked in each subscriber equipment (TLN) for the existence of a ring-shaped network (RN) in which the address table (at) associated with this subscriber equipment (TLN) has not yet been distributed, and when such a ring shaped network (RN) has been identified, the distribution of the associated address table (at) is initiated by formation of a distribution information item (vi).

## Revendications

1. Procédé de distribution de tables d'adresses, comprenant toutes les adresses de postes d'abonnés d'un réseau en anneau, à tous les postes d'abonnés dans le réseau en anneau respectif, ainsi qu'à "n" autres réseaux en anneau, selon lequel chaque réseau en anneau est muni d'un poste d'abonné qui contrôle le réseau en anneau respectif et dans lequel, en fonction de chaque configuration dans le réseau en anneau devant être respectivement contrôlé, une table d'adresses présente est préparée, chaque réseau en anneau est relié, par l'intermédiaire d'au moins un dispositif de couplage, qui sert à réaliser l'adaptation physique et l'adaptation du point de vue procédure de deux réseaux en anneau, à un autre réseau en anneau, chaque poste d'abonné est muni d'une unité de commande d'accès, qui est utilisée pour l'accès au réseau, et d'autres dispositifs de commande qui commandent des procédures qui sont exécutées à l'intérieur du poste d'abonné et par lesquelles des informations contenant un format de paquet sont formées et transmises par l'intermédiaire de réseaux en anneau, et le traitement des informations reçues se poursuit en fonction du contenu de ces informations, et selon lequel
- en fonction de la présence d'une table d'adresses (at) dans un poste d'abonné (TLN-M), qui contrôle un réseau en anneau (RN), une information de distribution (vi), qui contient un format de paquet, est formée de telle sorte qu'elle comporte
· la table d'adresse (at) devant être présentement distribuée,
· une information de signalisation (mi) indiquant la présence d'une table d'adresses (at), et
· une information de réseau (ni), qui indique dans quel réseau en anneau (RN) a été distribué la table présente d'adresses, et
l'information de distribution (vi) ainsi formée est retransmise aux postes d'abonnés (TLN) qui sont situés en aval dans le sens de transmission et dans lesquels la table actuelle d'adresses (ai) présente ainsi que les informations (ni) de réseaux sont copiées et mémorisées et un contrôle est exécuté pour déterminer si un accès à d'autres réseaux en anneau (RN) est demandé par le poste d'abonné respectif (TLN),
- en fonction de la détermination d'un tel accès par le poste d'abonné respectif (TLN), une autre information de distribution (vi)
· comportant la table d'adresses (at) présente,
· l'information de signalisation (mi), et
· une autre information de réseau (mi), qui indique dans quels réseaux annulaires la table d'adresses présente a été distribuée,
est formée, et
cette information de distribution (vi) est retransmise aux postes d'abonnés (TLN) des autres réseaux en anneau (RN) et chaque poste d'abonné (TLN) copie et mémorise la table d'adresses (at) présente ainsi que l'autre information de réseau (ni),
- dans les postes d'abonnés (TLN), qui contrôlent respectivement un réseau en anneau (RN), des autres réseaux en anneau (RN), est formée, après la réception d'une information de distribution (vi), une information de réponse (ai) qui comporte un format de paquet et qui comprend
· la table d'adresses (at) de l'autre réseau en anneau (RN), et
· une information de signalisation (mi) indiquant la réponse, et
cette information de réponse (ai) est transmise au poste d'abonné (TLN-M), qui contrôle le réseau en anneau (RN) et qui forme initialement la table d'adresses présente,
- ce poste d'abonné (TLN-M) forme, après la réception d'une information de réponse (ai), qui lui est adressée, une information d'émission circulaire (rsi) possédant un format de paquet, de telle sorte que
· la table d'adresses (at) indiquée dans l'information de réponse (ai), et
· une information de signalisation (mi) contenant une demande de copiage,
sont présentes, et l'information d'émission circulaire (rsi) ainsi formée est transmise aux postes d'abonnés (TLN), qui sont situés en aval dans le sens de transmission, du réseau en anneau associé (RN), et chacun des postes d'abonnés (TLN) copie et mémorise la table d'adresses (at).

2. Procédé suivant la revendication 1, caractérisé par le fait que, dans un poste d'abonné (TLN) qui forme l'information de distribution (vi), on ajoute à cette information de distribution (vi) une information de comptage, qui indique le nombre de postes d'abonnés (TLN) dans un réseau en anneau (RN), qui est réduit d'un nombre représentant un poste d'abonné (TLN), et qui est réduite, par les postes d'abonnés (TLN) en aval dans le sens de transmission, d'une information de comptage représentant respectivement un poste d'abonné (TLN).

3. Procédé suivant la revendication 1 ou 2, caractérisé par le fait que, dans un poste d'abonné (TLN) qui forme l'information de distribution (vi), on ajoute à cette information de distribution (vi) une information de transfert en anneau qui indique une distribution d'une table d'adresses (at) au-delà du réseau en anneau (RN) associé respectivement à cette table d'adresses (at).

4. Procédé suivant l'une des revendications précédentes, caractérisé par le fait que, dans chaque poste d'abonné (TLN), après la réception d'une information de distribution (vi), l'information de réseau (ni) contenue dans cette information de distribution, est contrôlée concernant la présence d'un réseau en anneau (RN), dans lequel la table d'adresses (at) associée à ce poste d'abonné (TLN) n'a pas encore été distribuée, et, en fonction de la détermination d'un tel réseau en anneau (RN), la distribution de la table d'adresses associée (at) est déclenchée par formation d'une information de distribution (vi).
